(19)

Europäisches
Patentamt

European
Patent Office

Office européen
des brevets

(11)　EP 3 835 437 A1

(12)　EUROPEAN PATENT APPLICATION
published in accordance with Art. 153(4) EPC

(43) Date of publication:
16.06.2021　Bulletin 2021/24

(21) Application number: 18929550.4

(22) Date of filing: 18.12.2018

(51) Int Cl.:
*C21C 7/072* (2006.01)　　*B22D 1/00* (2006.01)

(86) International application number:
PCT/KR2018/016100

(87) International publication number:
WO 2020/032331 (13.02.2020 Gazette 2020/07)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 07.08.2018　KR 20180091951

(71) Applicant: POSCO
Gyeongsangbuk-do 37859 (KR)

(72) Inventors:
• LEE, Sang Beom
Pohang-si,
Gyeongsangbuk-do 37671 (KR)
• LEE, Rak Do
Pohang-si,
Gyeongsangbuk-do 37613 (KR)

• HAN, Sang Hun
Pohang-si,
Gyeongsangbuk-do 37621 (KR)
• JEONG, Eun Ju
Busan 48516 (KR)
• YOON, Sang Hyeon
Pohang-si,
Gyeongsangbuk-do 37575 (KR)
• HAN, Seung Min
Pohang-si,
Gyeongsangbuk-do 37671 (KR)
• KIM, Wan Yi
Pohang-si,
Gyeongsangbuk-do 37669 (KR)

(74) Representative: Zech, Stefan Markus
Meissner Bolte Patentanwälte
Rechtsanwälte Partnerschaft mbB
Postfach 86 06 24
81633 München (DE)

(54)　**METHOD FOR TREATING MOLTEN STEEL AND APPARATUS THEREFOR**

(57)　The present invention relates to a method for treating molten steel and an apparatus therefor, and the method may include preparing molten steel in a container, supplying a stirring gas to the container to stir the molten steel, measuring a first vibration amplitude (Btl) occurring in the container, and determining a path for supplying the stirring gas according to the measured first vibration amplitude (Bt1), wherein a nozzle clogging phenomenon due to inclusions or an occurrence of defect such as a crack in a product may be suppressed in casting by effectively removing inclusions in the molten steel.

Fig.4

**EP 3 835 437 A1**

**Description**

## TECHNICAL FIELD

The present invention is related to a method for treating molten steel and an apparatus therefor, and more particularly, to a method for treating molten steel capable of improving cleanliness of molten steel and an apparatus therefor.

## BACKGROUND ART

In general stainless molten steel may be provided through a continuous casting process after undergoing an argon oxygen decarburization (ADO) process and a component adjustment process (ladle treatment (LT)).

Here, the component adjustment process is a process in which molten steel having undergone an argon oxygen decarburization process is charged in a ladle, a ferroalloy is added, and inclusions in the molten steel are floated and removed. At this point, the molten steel may be stirred by supplying a stirring gas through a nozzle provided in a lower portion of the ladle.

Meanwhile, while requirement for improving the cleanliness of molten steel increases due to advancement in steel types, component adjustment processes have gained importance. Accordingly, in order to ensure the cleanliness of molten steel, the efficiency of removing inclusions in the molten steel should be enhanced. At this point, since the efficiency of removing inclusions is affected by the stirring strength of the molten steel, the flowrate of a stirring gas supplied to stir the molten steel at a suitable stirring strength is required to be accurately adjusted.

However, when the integrity of a nozzle deteriorates due to repeated processes, or when leakage occurs in a pipe for transferring a stirring gas, the molten steel cannot be stirred at a desired strength. Accordingly, there is a limitation in that inclusions in the molten steel are not properly removed, the cleanliness of the molten steel thereby deteriorates, and the quality of products manufactured therethrough deteriorates.

(Prior art document 1) KR2002-0032710 A
(Prior art document 2) KR0696853 B

## DISCLOSURE OF THE INVENTION

### TECHNICAL PROBLEM

The present invention provides a method for treating molten steel, which is capable of stirring molten steel under optimal conditions using various phenomena occurring during stirring of the molten steel and an apparatus for the same.

The present invention provides a method for treating molten steel, which is capable of reducing the deviation in molten steel quality by automating a component adjustment process of molten steel to efficiently remove inclusions in molten steel.

### TECHNICAL SOLUTION

A method for treating molten steel according to an embodiment of the present invention includes: preparing molten steel in a container; supplying a stirring gas to the container to stir the molten steel; measuring a first vibration amplitude (Btl) occurring in the container; and determining a path for supplying the stirring gas according to the measured first vibration amplitude (Btl).

The method may include: a main path configured to supply a predetermined amount of the stirring gas to the container; and a sub path configured to adjust an amount of the stirring gas and supply the adjusted amount of the stirring gas to the container, and the stirring of the molten steel may include supplying a predetermined amount of the stirring gas using the main path.

The determining of the path may include determining supplying the stirring gas to the container using any one of the main path and the sub path according to the first vibration amplitude (Btl).

The determining of the path may include: comparing the first vibration strength with a predetermined first target vibration range (B01); and continuously supplying a predetermined amount of the stirring gas using the main path when the first vibration amplitude (Btl) is within the first target vibration range (B01).

The determining of the path may include: comparing the first vibration strength with a predetermined first target vibration range (B01); and blocking the main path, increasing a flowrate of the stirring gas, and supplying the stirring gas to the container through the sub path when the first vibration amplitude (Btl) is smaller than the first target vibration range (B01).

The method may include: re-measuring a vibration amplitude (Btln) occurring in the container after the increasing the flowrate of the stirring gas and supplying the stirring gas to the container through the sub path; and comparing the re-measured vibration strength (Btln) and the first target vibration range (B01), wherein re-measuring the first vibration amplitude (Btn1) so that the re-measured vibration amplitude (Btln) is within the first target vibration range (B01) and re-adjusting the flowrate of the stirring gas may be repeatedly performed.

The method may include: adding a ferroalloy into the molten steel in order to adjust components of the molten steel when the path for supplying the stirring gas is determined.

The method may include: reducing a flowrate of the stirring gas supplied to the molten steel and slightly stirring the molten steel after the adding the ferroalloy; adding a sub raw material to the molten steel; measuring a second vibration amplitude (Bt2) occurring in the container; comparing the second vibration amplitude (Bt2) and a predetermined second target vibration range (B02); and determining whether to adjust the flowrate of the stirring gas according to a comparison result.

The method may include: determining that the flowrate of the stirring gas is not adjusted when the second vibration amplitude (Bt2) is within the second target vibration range (B02) and maintaining the flowrate of the stirring gas being supplied to the container.

The method may include: determining that the flowrate of the stirring gas is adjusted when the second vibration amplitude (Bt2) is out of the second target vibration range (B02), adjusting the flowrate of the stirring gas, and supplying the stirring gas to the container.

The method may include: re-measuring a second vibration amplitude (Bt2n) occurring in the container after the adjusting the flowrate of the stirring gas and supplying the stirring gas to the container; and comparing the re-measured second vibration strength (Bt2n) and the second target vibration range (B02), wherein re-measuring the second vibration amplitude (Btn2) so that the re-measured second vibration amplitude (Bt2n) is within the second target vibration range (B01) and re-adjusting the flowrate of the stirring gas may be repeatedly performed.

The method may further include: calculating a naked melt area (At) formed in the slightly stirring the molten steel; and determining whether to adjust the naked melt area according to the calculated naked melt area.

The calculating of the naked melt area of the molten steel may include: measuring a temperature of a melt surface of the molten steel; converting the measured temperature of the melt surface into image data representing a temperature distribution of the melt surface; and calculating the naked melt area (at) of the molten steel from the image data.

The determining of whether to adjust the naked melt area may include determining that the naked melt area is not adjusted when the calculated naked melt area (At) is within a preset naked melt area range (A0), and slightly stirring the molten steel.

The determining of whether to adjust the naked melt area may include determining that the naked melt area is adjusted when the calculated naked melt area (At) is out of the preset naked melt area range (A0), and further adding a sub raw material to the molten steel while slightly stirring the molten steel.

The calculating of the naked melt area and the determining of whether to adjust the naked melt area may be repeatedly performed while slightly stirring the molten steel.

An apparatus for treating molten steel according to an embodiment of the present invention includes: a gas supply part for supplying a stirring gas into a container containing molten steel; a first measurement part for measuring a vibration occurring in the container; a control unit for controlling the gas supply part so that a path for supplying the stirring gas is determined using a result measured by the first measurement part.

The gas supply part may include: a plurality of paths configured to supply the stirring gas to the container, and the plurality of paths comprises: a main path configured to supply a predetermined amount of the stirring gas; and a sub path configured to adjust the amount of the stirring gas and supply the adjusted amount of stirring gas to the container.

The main path may include: a main pipe configured to connect a reservoir storing the stirring gas and the container; and a flowrate controller provided to the main pipe and configured to perform adjustment so that a predetermined amount of the stirring gas is supplied to the container.

The sub path may include: a sub pipe configured to connect the reservoir and the container; and a valve provided to the sub pipe so that an amount of the stirring gas supplied to the container is adjusted.

The apparatus may include: a second measuring part configured to measure a temperature of a melt surface of the molten steel; and a raw material supply part configured to add a raw material to the molten steel.

The control unit may include: a storage unit configured to store pieces of information required during treating the molten steel; an image processing unit configured to convert a measurement result from the second measurement part into image data; a comparison unit configured to determine a subsequent treatment method using the measurement result measured by the first measurement part and the image data; and a control unit configured to control operations of the gas supply part and the raw material supply part so that the molten steel may be treated by the subsequent treatment method determined by the comparison unit.

The control unit may control operations of the flowrate controller and the valve so that the stirring gas may be supplied to the container using the main pipe or the sub pipe.

## ADVANTAGEOUS EFFECTS

According to an embodiment of the present invention, the amplitude of vibration occurring when molten steel is stirred is measured and the stirring strength of the molten steel may be controlled using the vibration amplitude. Accordingly, the molten steel may be stirred at a target stirring strength by adjusting the supply flowrate of the stirring gas on the basis of the vibration strength. Thus, the components of the molten steel are uniformized and the efficiency of removing inclusions is enhanced, so that the quality and cleanliness of the molten steel may be improved.

In addition, the area of a naked melt occurring in a process of stirring the molten steel is minimized, and thus, oxidation due to contact with atmospheric air may be suppressed. In addition, deviation in operations that may be caused by an operator during molten steel treatment may be prevented by automating a series of processes.

## BRIEF DESCRIPTION OF THE DRAWINGS

FIG. 1 is a schematic view illustrating an apparatus for treating molten steel according to an embodiment of the present invention.

FIG. 2 is a conceptual block diagram illustrating the molten steel treatment apparatus illustrated in FIG. 1.

FIGS. 3 and 4 are flowcharts sequentially illustrating a method for treating molten steel according to an embodiment of the present invention.

FIG. 5 is a graph illustrating an experimental result for verifying an effect of a method for treating molten steel according to an embodiment of the present invention.

## MODE FOR CARRYING OUT THE INVENTION

Hereinafter, exemplary embodiments will be described in detail with reference to the accompanying drawings. The present disclosure may, however, be embodied in different forms and should not be construed as limited to the embodiments set forth herein. Rather, these embodiments are provided so that this disclosure will be thorough and complete, and will fully convey the scope of the present disclosure to those skilled in the art. In the drawings, like reference numerals refer to like elements throughout.

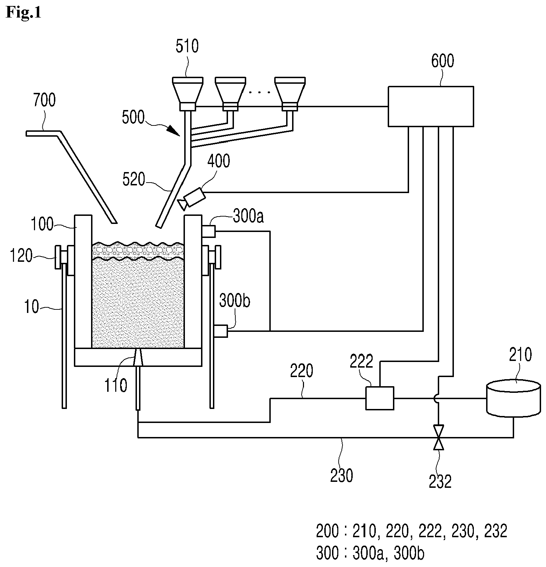

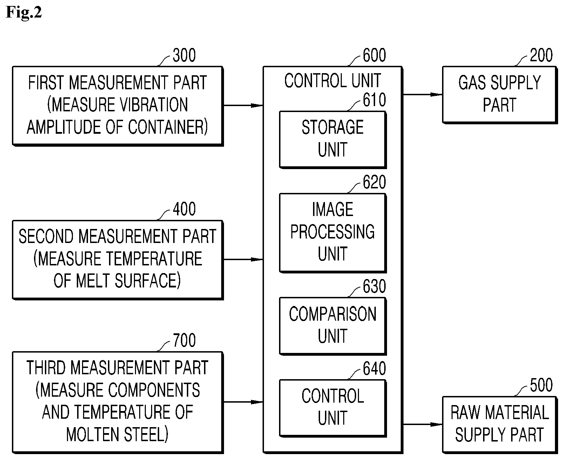

FIG. 1 is a schematic view illustrating an apparatus for treating molten steel according to an embodiment of the present invention, and FIG. 2 is a conceptual block diagram illustrating the molten steel treatment apparatus illustrated in FIG. 1.

Referring to FIG. 1, an apparatus for treating molten steel according to an embodiment of the present invention may include: a gas supply part 200 for supplying a stirring gas into a container 100; a first measurement part 300 for measuring the amplitude of vibration occurring in the container 100; and a control unit 600 capable of controlling an operation of the gas supply part 200 so that a supply path of the stirring gas can be selected using the amplitude of vibration measured by the first measurement part 300. In addition, the molten steel treatment apparatus according to an embodiment of the present invention may include: a second measurement part 400 capable of measuring the temperature of the melt surface of molten steel; a third measurement part (700) for measuring the component and temperature of the molten steel; and a raw material supply part 500 for adding, into the molten steel, raw materials such as a ferroalloy, a cooling agent, or sub raw materials.

The container 100 is of a type having an internal space, and may be provided with a hook 120 for moving the container 100 and supporting the container on a work table 10. In addition, a nozzle 110 for blowing a stirring gas for stirring molten steel may be provided in a lower portion of the container 100. That is, when the stirring gas is supplied through the nozzle formed in the bottom surface of the container 100, the molten steel contained in the container 100 may be stirred while fluctuating. An inert gas such as an argon (Ar) gas may be used as the stirring gas, but the embodiment of the present invention is not limited thereto, and other inert gases or various gases for refining may be used.

The gas supply part 200 may include: a reservoir 210 for storing the stirring gas; and a plurality of paths which connect the reservoir 210 and the nozzle 110 so that the stirring gas can be supplied to the nozzle 110 formed in the container 100. The plurality of paths include a main path and a sub path, the main path may mean a path which is always connected to the container 100 to supply the stirring gas, and the sub path may mean a path through which the stirring gas can be supplied to the container when a problem occurs in the main path. Hereinafter, the main path will be referred to as a main pipe 220 and the sub path will be referred to as a sub pipe 230.

The main pipe 220 may be provided with: a flowrate controller 222 for adjusting the flowrate of the stirring gas supplied through the main pipe 220; and the sub pipe 230 may be provided with a valve 232 which may open/close the inside of the sub pipe 230.

Here, the flowrate controller 222 is a control device, which adjusts the stirring gas so that the stirring gas may be supplied at a determined flowrate, for example, a target flowrate, according to process conditions, and has difficulty in adjusting the stirring gas so that the flowrate of the stirring gas abruptly increases when an abnormal situation such as a leak in the main pipe 220 occurs. However, when the target flowrate is set to be excessively high or low, it is possible to decrease or increase the flowrate of the stirring gas in order to properly adjust the target flowrate.

In contrast, the valve 232 may adjust the flowrate of the stirring gas by adjusting an internal opening degree of the sub pipe 230, and thus has a merit in that the flowrate of the stirring gas may abruptly be adjusted when an abnormal situation occurs. At this point, the sub pipe 230 is designed such that the stirring gas may be supplied in an amount from an amount which can be supplied through the main pipe 220 by the adjustment of the opening degree using the valve 232 to an amount more than the amount, for example, approximately 10 times the amount, which can be supplied through the main pipe 220.

Through such a configuration, the gas supply part 200 may supply the nozzle 110 with the stirring gas using either the main pipe 220 or the sub pipe 230. At this point, the stirring gas may be supplied to the nozzle 110 using the main pipe 220 or the sub pipe 230 by controlling the operations of the flowrate controller 222 and the valve 232.

The first measurement part 300 may measure vibration occurring in the container during stirring of the molten steel, and transmit the measurement results to the control unit 600. The first measurement part (300a, 300b) may be installed on at least one among the container 100 and the work table 10 that supports the container 100. At this point, when the first measurement part 300 is installed on the container 100, the first measurement part 300 may be installed so as to be attachable/detachable to/from an outer wall of the container 100.

Meanwhile, the stirring gas supplied to the nozzle 110 through the main pipe 220 may be supplied to the nozzle 110 in a state of having a flowrate adjusted by the flowrate controller 222. However, when a defect such as a crack occurs in the main pipe 220, the stirring gas may leak through a portion in which the defect is formed. In this case, when the stirring gas is supplied to the nozzle 110, the molten steel cannot be stirred so as to have a stirring strength, that is, a target stirring strength. Accordingly, the stirring strength of the molten steel may be controlled by measuring the vibration amplitude occurring in the container 100 by the first measurement part 300 and determining a path for supplying the stirring gas according to the measured vibration amplitude or by adjusting the flowrate of the stirring gas. Here, the vibration amplitude may mean an arbitrary value that is obtained by converting the vibration amplitude transmitted to the container when the molten steel is stirred and representing the vibration amplitude by a dimensionless function.

The second measurement part 400 may measure the temperature of the melt surface of the molten steel contained in the container 100 and transmit the measurement results to the control unit 600. Accordingly, the second measurement part 400 may be installed on an upper portion of the container 100 so that the temperature of the melt surface of the molten steel can be measured. At this point, the second measurement part 400 may include a temperature sensor such as an infrared sensor which can measure the temperature of the entire surface of the molten steel, or a camera which can capture an image of the melt surface.

The third measurement part 700 may sample a portion of the molten steel contained the container 100, measure the temperature of the molten steel, and analyze the components of the molten steel. The temperature and the components of the molten steel which are measured by the third measurement part 700 may be transmitted to the control unit 600. Here, the third measurement part 700 is described as directly analyzing the components of the molten steel, but the components may also be analyzed by sending the molten steel to an analysis room.

The raw material supply part 500 may supply the molten steel with a sub raw material such as a ferroalloy, a cooling agent, quicklime, a $CaO\text{-}SiO_2$-based flux, and the like. The material support part 500 may include: a plurality of hoppers 510 for storing a ferroalloy, a cooing agent, sub materials, and the like; and a supply pipe 520 having one end connected to a hopper 510 and the other end extending to an upper portion of the container 100. At this point, the hopper 510 may be provided with a discharger (not shown) capable of selectively discharging the ferroalloy or the sub material.

The control unit 600 may control the operations of the gas supply part 200 and the raw material supply part 500 using the measured results of the first measurement part 300 and the second measurement part 400.

Referring to FIG. 2, the control unit 600 may include: a storage unit 610 which stores various pieces of information required during molten steel treatment; an image processing unit 620 which converts the measured results from the second measurement part 400 into image data; a comparison unit 630 which determines a subsequent treatment method using the measured results from the first measurement part 300 and the image data obtained from the image processing unit 620; and a control unit 640 which may control the operations of the gas supply part 200 and the raw material supply part 500 through the treatment method determined by the comparison unit 630.

The storage unit 610 may include target flowrate information of the stirring gas to be supplied to the nozzle 110 according to the component, temperature, and treatment time for the molten steel, and target vibration range information occurring in the container 100 according to the target flowrate of the stirring gas. In addition, the storage unit 610 may include melt area information according to the amount of the molten steel contained in the container 100 and the naked melt area range to be used as a reference for controlling the naked melt area occurring during stirring of the molten steel. At this point, the naked melt area surface range may be set to be greater than approximately 0% and no greater than approximately 5%, and be controlled so that the naked melt area formed in the process of removing inclusions is included in the set range. Such pieces of information may be information prepared when the stirring gas is supplied to the container 100.

The image processing unit 620 may convert the measurement result from the second measuring part 400 into image data of the molten steel melt surface. For example, when the second measurement part 400 is used as a temperature sensor, the melt surface temperature may be measured through the second measurement part 400. At this point, the region in which slag is formed on an upper portion of the molten steel may have a lower temperature than the region in which slag is not formed in the upper portion of the molten steel, that is, than the naked melt. The image processing unit 620 may convert the measurement result from the second measuring part 400 into image data representing the temperature distribution of the melt surface.

The comparison unit 630 may determine a subsequent treatment method by comparing the measurement results from the first measurement part 300, the second measurement part, and the image data obtained from the image processing unit 620 with each other.

The comparison unit 630 may determine a path for supplying the stirring gas by comparing the vibration amplitude measured from the first measurement part 300 before adding a ferroalloy into the molten steel and a target vibration range determined according to process conditions. In addition, the comparison unit 630 may determine the flowrate of the stirring gas supplied through the determined path when the path for supplying the stirring gas is determined.

In addition, the comparison unit 630 may calculate a naked melt area from the image data obtained from the image processing unit 620. In addition, whether to add a sub raw material may be determined by comparing the calculated naked melt area and a target melt range.

In addition, the comparison unit 630 may determine the adding amount of the ferroalloy and the cooling agent using the measurement results from the third measurement part 700. That is, the adding amount of the ferroalloy for adjusting the components of the molten steel according to the components and temperature of the molten steel and then the adding amount of the Collin agent for controlling the temperature of the molten steel may be determined.

The control unit 640 may control the operations of the gas supply part 200 and the raw material supply part 500 using the treatment method determined from the comparison unit 630.

That is, when the path for supplying the stirring gas is determined, the control unit 640 may control the operations of the flowrate controller 222 so that the stirring gas is supplied to the stirring gas supply path determined by the comparison unit 630, for example, any one among the main pipe 220 and the sub pipe 230.

In addition, the control unit 640 may control the operation of the raw material supply part 500 so that the ferroalloy and the sub raw material are added to the molten steel according to the results determined by the comparison unit 630.

Hereinafter, a method for treating molten steel according to an embodiment of the present invention will be described.

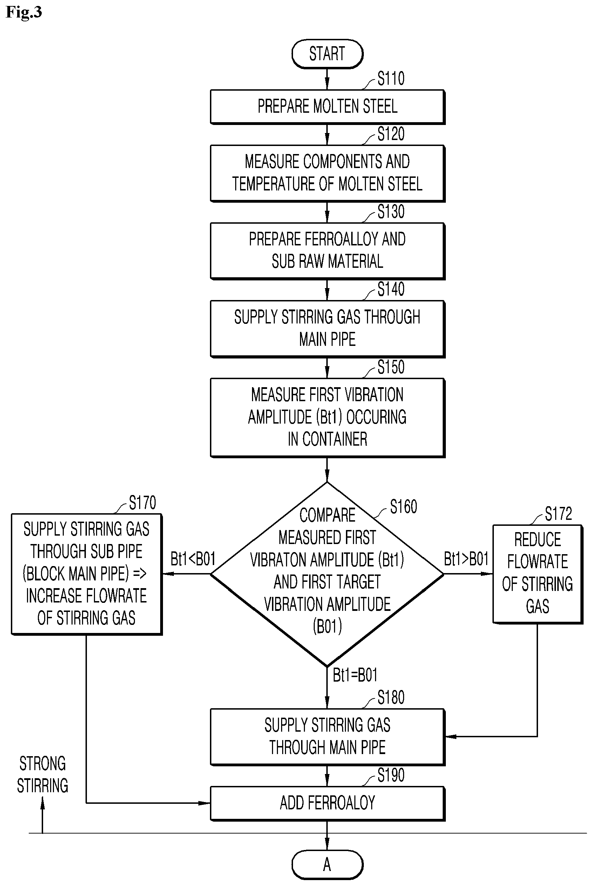

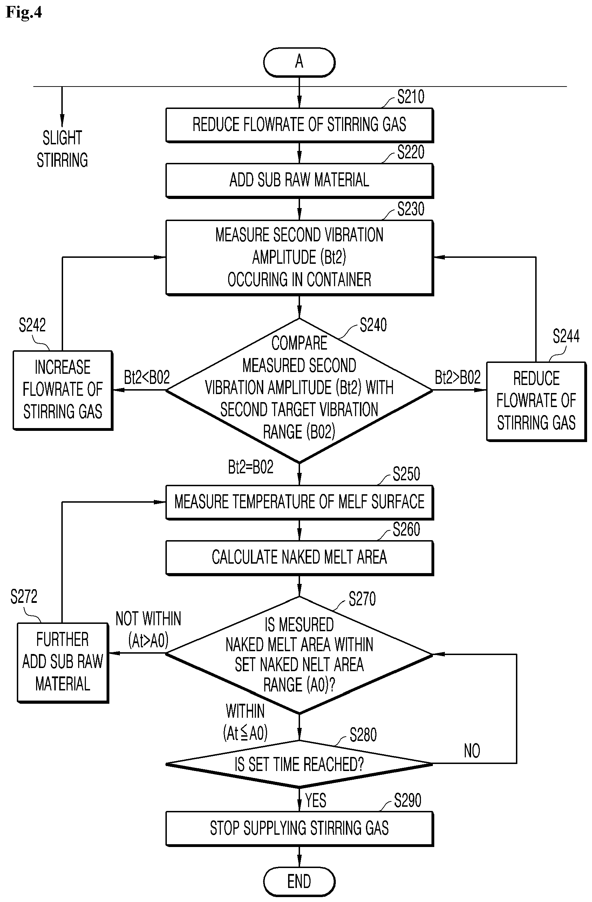

FIGS. 3 and 4 are flowcharts sequentially illustrating a method for treating molten steel according to an embodiment of the present invention.

A molten steel treatment process may include an operation for adjusting the components of the molten steel and an operation for removing inclusions in the molten steel. At this point, strong stirring of strongly stirring the molten steel may be performed in the process for adjusting the components of the molten steel, and the molten steel may be slightly stirred at a stirring strength weaker than the strong stirring in the process for removing inclusions in the molten steel. Here, the strong stirring may mean that the ferroalloy to be added to the molten steel is melted, and a great amount of the stirring gas is supplied so that the ferroalloy is uniformly mixed to stir the molten steel. In addition, the slight stirring may mean that the molten steel is weakly stirred by supplying a smaller amount of stirring has than in the strong stirring so that inclusions in the molten steel may be floated.

FIG. 3 illustrates a process for adjusting the components of molten steel.

Referring to FIG. 3, the adjusting the components of molten steel may include: preparing the molten steel in a container (S I 10), supplying a stirring gas to the container to stir the molten steel (S140); measuring the strength of first vibration occurring in the container (S 150), and determining the stirring gas according to the measured strength of the first vibration (S160).

First, the molten steel manufactured in an electric furnace is charged in the container, and the molten steel may be prepared by performing decarburizing and deoxidizing in the argon oxygen decarburization process AOD (S110). In addition, the container containing the molten steel may be moved to a place for component adjustment.

Next, the container containing the molten steel is fixed to a work table 10 installed in a place for component adjustment, a portion of the molten steel is sampled through a third measurement part 700, and the components and the temperature may be measured (S120).

In addition, the treatment conditions for the molten steel may be determined according to the measure components, the temperature, and the molten steel amount. At this point, the treatment conditions for the molten steel may include a target flowrate of the stirring gas for stirring the molten steel, a target vibration range according to the target flowrate, the type of ferroalloy, the adding amount of sub raw material, a target area range A0 of melt area, and the like.

Here, the target flowrate of the stirring gas may include: a first target flowrate F01 of the stirring gas for strongly stirring the molten steel before adding the ferroalloy; and a target flowrate of the stirring gas for slightly stirring the molten steel after adding the ferroalloy, for example, a second target flowrate F02. In addition, the target vibration range may include the amplitude of vibration occurring in the container 100 when the first target flowrate F01 is supplied to the container 100 and the molten steel is stirred, that is, a first target vibration range B01; and the amplitude of vibration occurring in the container 100 when the second target flowrate F02 is supplied to the container 100 and the molten steel is stirred, that is, a second target vibration range B02. Here, the first target vibration range B01 and the second target vibration range B02 may be information prepared by collecting the measured results while changing the flowrate of the stirring gas in the previous operation.

Meanwhile, the equation for deriving a stirring strength is known as Formula 1 below.

Formula 1)

$$e(W/\text{ton}) = 14.23 \times (V(N\ \text{m}^3)T(K)/M(\text{ton})) \times \log((1+H(m))/(1.48 \times P(\text{atm})))$$

(V: flowrate of stirring gas blown through nozzle, T: temperature of molten steel, M: molten steel amount, H: distance from bottom of container to melt surface; and P: pressure of stirring gas measure at melt surface)

According to Formula 1 above, the stirring strength e is proportional to the flowrate of the stirring gas and the temperature of the molten steel, and is inversely proportional to the molten steel amount. Accordingly, when the temperature and the amount of the molten steel stored in the container are determined, the greater the flowrate of the stirring gas supplied through the nozzle 110, the greater the stirring strength may be.

The stirring strength has a relationship proportional to the amplitude of vibration occurring in the container 100 when the molten steel is stirred. That is, the greater the stirring strength of the molten steel, the greater the amplitude of vibration occurring in the container 100. Accordingly, when the amplitude of vibration occurring in the container 100 when the molten steel is stirred is known, the flowrate of the stirring gas supplied to the molten steel may thereby be predicted or calculated.

When the type and adding amount of ferroalloy and the adding amount of sub raw material are determined, the ferroalloy and the sub raw material to be added to the molten steel through a raw material supply part 500 may be prepared (S130). For example, when a steel of a type including chromium (Cr), nickel (Ni), silicon (Si) and manganese (Mn) is manufactured, the quantities of ferroalloys, such as ferro chromium (FeCr), ferro nickel (FeNi), ferro silicon (FeSi), ferro manganese (FeMn) or the like, of the amount as much as the lacking amount in the molten steel, and the amount of a cooling agent for matching with a subsequent casting temperature may be determined. In addition, the ferroalloy and the cooling agent may be prepared by weighing the ferroalloy and the cooling agent to be the calculated quantities.

A main pipe 220 and a sub pipe 230, which are for supplying a stirring gas to a nozzle 110, may be connected to a lower portion of the container 100. In addition, a first measurement part 300 may be installed on at least any one among the container 100 and a work table 10, and a second measurement part 400 may be installed on an upper portion of the container 100.

Subsequently, the molten steel may be stirred (S140) by supplying the stirring gas to the nozzle 110 through the main pipe 220. At this point, the flowrate of the stirring gas may be adjusted by a flowrate controller 222 so that the stirring gas may be supplied at a target flowrate.

When the stirring gas is supplied to the nozzle 110, the stirring gas may be introduced into the container 100 and stir the molten steel, for example, strongly stir the molten steel (S140). In addition, while the molten steel is stirred, a first vibration amplitude Bt1 occurring in the container 100 may be measured using the first measurement part 300 (S150). The first vibration amplitude Bt1 measured by the first measurement part 300 is transmitted to a control unit 600, and a comparison unit 630 may compare the measured first vibration amplitude with a first target vibration range B01 stored in a storage unit 610 (S160).

From the result of the comparison of the first vibration amplitude Bt1 and the first target vibration range B01, when the measured first vibration amplitude Bt1 is included in the first target vibration range B01, the molten steel may be stirred while the flowrate of the stirring gas supplied through the main pipe 220 is maintained as it is (S180). Subsequently, the prepared ferroalloy may be added to the molten steel (S190).

Conversely, from the result of the comparison of the first vibration amplitude Bt1 and the first target vibration range B01, when the measured first vibration amplitude Bt1 is smaller than the minimum value of the first target vibration range B01 (Bt1<B01), the stirring gas supplied through the main pipe 220 is blocked, and the stirring gas may be supplied to the main container 100 through the sub pipe 230 (S170). At this point, the flowrate of the stirring gas supplied to the container 100 may be supplied in a state of being increased compared to the flowrate of the stirring gas supplied through the main pipe 220.

Subsequently, the prepared ferroalloy may be added to the molten steel (S190).

In addition, from the result of the comparison of the first vibration amplitude Bt1 and the first target vibration range B01, when the measured first vibration amplitude Bt1 is greater than the maximum value of the first target vibration range B01 (Bt1>B01), the target flowrate is determined to be too high, and the flowrate of the stirring gas may be reduced and supplied to the container 100 through the main pipe 220 (SI80). Subsequently, the prepared ferroalloy may be added to the molten steel (S190).

Meanwhile, when the measured first vibration amplitude Bt1 is smaller than the first target vibration range B01 (Bt1<B01), the supply path of the stirring gas is changed to the sub pipe 230, and the flowrate of the stirring gas is changed and supplied to the container 100.

In addition, the vibration amplitude Btln occurring in the container is measure again using the first measurement part 300, and the measured vibration amplitude Btln and the first target vibration range B01 may be compared again. From the comparison results, when the re-measured vibration amplitude Btln is included in the first target vibration range B01 (Bt1n≤B01), the stirring gas may be supplied to the container 100 without separate flowrate adjustment, and the ferroalloy may be added.

However, from the result of the comparison between the re-measured vibration amplitude Btln and the target vibration range B01, when the re-measured vibration amplitude Btln is not included in the target vibration range B01, the flowrate of the stirring gas supplied through the sub pipe 230 may be adjusted until the measured vibration amplitude Btln is included in the target vibration range B01. In addition, when the re-measured vibration amplitude Btln is included in the target vibration range B01, the prepared ferroalloy may be added to the molten steel.

FIG. 4 illustrates a process of removing inclusions in the molten steel.

Referring to FIG. 4, after adding the ferroalloy into the molten steel, the flowrate of the stirring gas supplied to the container 100 through the main pipe 220 or the sub pipe 230 is reduced and the molten steel may be slightly stirred (S210). At this point, the reason for the slight stirring of the molten steel is to remove inclusions in the molten steel to a top portion of the molten steel and remove the inclusions. When the molten steel is slightly stirred, the stirring gas of an amount smaller than the amount of the stirring gas for strong stirring of the molten steel, for example, approximately 1/10 thereof, may be supplied, and the amount may be defined as the target flowrate of the stirring gas, for example, as a second target flowrate F02.

A sub raw material may be added to the molten steel while the molten steel is slightly stirred as such. The sub raw material is for forming slag on the top portion of the molten steel in order to prevent the oxidation of the molten steel, and may include quicklime, a $CaO$-$SiO_2$-based flux, or the like.

In addition, the amplitude of vibration occurring in the container 100, for example, a second vibration amplitude Bt2 may be measured using the first measurement part 300 (S230). The process of measuring the amplitude of vibration occurring in the container 100 may also be performed even before adding the sub raw material.

When the second vibration amplitude (Bt2) is measured, is compared with a second target vibration range B02, and according to the results thereof, whether to adjust the flowrate of the stirring gas supplied to the nozzle 110 may be determined.

From the comparison result, when the measured second vibration amplitude Bt2 is included in the second target vibration range B02 (Bt2≤B02), it may be determined that the stirring gas supplied through the main pipe 220 or the sub pipe 230 is supplied at a second target flowrate F02. In addition, the molten steel may be slightly stirred for a preset time while the flowrate of the stirring gas is maintained as it is.

Conversely, from the comparison result, when the measured second vibration amplitude Bt2 is smaller than the second target vibration range B02 (Bt2<B02), it may be determined that the stirring gas is being supplied at a smaller amount than the second target flowrate F02. In addition, the flowrate of the stirring gas supplied to the nozzle 110 may be increased (S242). This is because the stirring strength of the molten steel is too low, and inclusions in the molten steel cannot be effectively removed. In addition, when the second vibration amplitude Bt2n is re-measured and the re-measured second vibration amplitude Bt2n is included in the second target vibration range B02, the molten steel may be slightly stirred for a preset time while the flowrate of the stirring gas is maintained as it is. However, when the re-measured second vibration amplitude is out of the second target vibration range B02, the flowrate of the stirring gas may be adjusted so that the re-measured second vibration amplitude Bt2n is included in the second target vibration range B02. The above process may be performed at least once.

Alternatively, from the comparison result, when the measured second vibration amplitude Bt2 is larger than the second target vibration range B02 (Bt2>B02), it may be determined that the stirring gas is being supplied at a greater amount than the second target flowrate F02. In addition, the flowrate of the stirring gas supplied to the nozzle 110 may be decreased (S244). This is because the inclusions separated from the molten steel is added again to the molten steel due to excessively high stirring strength of the molten steel, a naked melt area increases, and new inclusions are formed while the molten steel is oxidized. In addition, when the second vibration amplitude Bt2n is re-measured and the re-measured second vibration amplitude Bt2n is included in the second target vibration range B02, the molten steel may be slightly stirred for a preset time while the flowrate of the stirring gas is maintained as it is. However, when the re-measured second vibration amplitude Bt2n is out of the second target vibration range B02, the flowrate of the stirring gas may be adjusted so that the re-measured second vibration amplitude Bt2n is included in the second target vibration range B02. The above process may be performed at least once.

Through a method as described above, a naked melt area formed on the melt surface of the molten steel may be controlled while slightly stirring the molten steel. When the molten steel is stirred by using the stirring gas, the stirring gas blown into the molten steel through the nozzle 110 is discharged through the melt surface of the molten steel, and at this point, a portion where slag is pushed in the region in which the stirring gas is discharged and the molten steel is exposed is referred as a naked melt.

The naked melt area may be controlled as the following.

First, the temperature of the melt surface may be measured using the second measurement part 400 (S250). In addition, when the measured result from the second measurement part 400 is transmitted to the control unit 600, an image processing unit 620 of the control unit 600 may convert the result into image data, which shows the temperature distribution of the melt surface, using the measurement result from the second measurement part 400. Subsequently, a comparison unit 630 may calculate the naked melt area At using the image data obtained from the image processing unit 620 (S260).

When the naked melt area At is calculated as such, the comparison unit 630 may compare the naked melt area At and a set naked melt area range A0 (S240). At this point, the set naked melt area range A0 may mean a fraction occupied by the naked melt with respect to the total area of the melt surface of the molten steel contained in the container 100. For example, the set naked melt area range A0 may be determined to be approximately greater than 0% and no greater than approximately 5% with respect to 100% of the total area of the melt surface. When the molten steel is stirred using the stirring gas, the stirring gas blown into the molten steel through the nozzle 110 is discharged through the melt surface of the molten steel, and therefore a naked melt is inevitably formed. When the naked melt is formed on the melt surface, the molten steel is directly exposed to the atmospheric air, and therefore there is a problem in that the molten steel is oxidized. Accordingly, it is durable that the molten steel be slightly stirred while minimizing the area of the naked melt.

From the result of comparing the calculated naked melt area At and a set naked melt area range A0, when the calculated naked melt are At is included in the set naked melt area range A0 (At≤A0), inclusions in the molten steel may be removed by slightly stirring the molten steel while maintaining the current state.

In addition, when the preset time is reached (S280), the supply of the stirring gas is stopped (S290) and the process may be ended.

Conversely, from the result of comparing the calculated naked melt area At and a set naked melt area range A0, when the calculated naked melt are At is out of the set naked melt area range A0 (At≤A0), a sub raw material may be additionally added to the molten steel (S272) by controlling the raw material supply part 500. Accordingly, slag is further formed on the top portion of the molten steel and the naked melt area may be reduced. Subsequently, in order to remove inclusions, a process in which while the molten steel is slightly stirred until the preset time is reached, the measurement of the temperature of the melt surface and the calculation of the naked melt area is repeated, and thus, the naked melt area At may be adjusted to be included in the set naked melt area range A0.

In addition, according to the type of steel, a Ca-Si wire or a Ti wire may be added into the molten steel using a feeder (not shown). Subsequently, when the preset time is reached (S280), the supply of the stirring gas is stopped (S290) and the process may be ended.

Hereinafter, an experimental example for verifying the effect of the method for treating molten steel according to an embodiment of the present invention will be described.

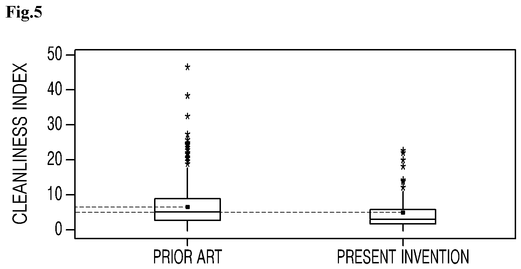

FIG. 5 is a graph illustrating an experimental result for verifying an effect of a method for treating molten steel according to an embodiment of the present invention.

**Example)**

Molten steel was prepared in a container, and an argon gas was supplied at a flowrate of approximately 100 Nl/min to strongly stir the molten steel. At this point, a first target flowrate might be approximately 100nl/min and a first target vibration range might be approximately 0.9-1.1. Subsequently, a ferroalloy was added to the molten steel, the molten steel was strongly stirred for a certain time, and the ferroalloy was melted and mixed into the molten steel.

After the addition of the ferroalloy was completed, the flowrate of the argon gas was reduced to a second target flowrate of approximately 10 Nl/min, the molten steel was slightly stirred, and quicklime which was a sub raw material for forming slag was added. At this point, the second target vibration range might be determined as approximately 0.09-0.11 which was approximately 1/10 of the first target vibration range.

The amplitude of vibration occurring in the container, that is, the amplitude of a second vibration amplitude, was measured while the molten steel was slightly stirred, and the flowrate of the argon gas was adjusted so that the measured second vibration amplitude was included in the second target vibration range.

In addition, the temperature of the melt surface of the molten steel was measured using a second measurement device while the molten steel was slightly stirred, and a naked melt area was calculated using the temperature. In addition, the calculated naked melt area and a preset naked melt area range were compared, and an adjustment was performed so that the calculated naked melt area was not out of the preset naked melt area range. For example, when the calculated naked melt area was out of the preset naked melt area range, the quicklime, which was a sub raw material, was further added and slag was further generated. In addition, while the molten steel was slightly stirred, such a process was repeated, so that the calculated naked melt area was not out of the preset naked melt area range.

Through such a method, the molten steel was treated for several times, and molten steel before the treatment and molten steel after the treatment were sampled and the number of inclusions was measured.

**Comparative example)**

Molten steel was prepared in a container, and an argon gas was supplied at a flowrate of approximately 100 Nl/min to strongly stir the molten steel. At this point, a first target flowrate might be approximately 100nl/min and a first target vibration range might be approximately 0.9-1.1. Subsequently, a ferroalloy was added to the molten steel, the molten steel was strongly stirred for a certain time, and the ferroalloy was melted and mixed into the molten steel.

After the addition of the ferroalloy was completed, the flowrate of the argon gas was reduced to a second target flowrate of approximately 10 Nl/min, the molten steel was slightly stirred, and quicklime which was a sub raw material for forming slag was added. At this point, the second target vibration range might be determined as approximately 0.09-0.11 which is approximately 1/10 of the first target vibration range.

The amplitude of vibration occurring in the container, that is, the amplitude of a second vibration amplitude, was measured while the molten steel was slightly stirred, and when the measured second vibration amplitude was out of the second target vibration range, the flowrate of the argon gas was not adjusted.

In addition, the temperature of the melt surface of the molten steel was measured using a second measurement device while the molten steel was slightly stirred, and a naked melt area was calculated using the temperature. In addition, the calculated naked melt area and a preset naked melt area range were compared, and even when the calculated naked melt area was out of the preset naked melt area range, a sub raw material was not added and slight stirring was performed.

Through such a method, the molten steel was treated for several times, and molten steel before the treatment and molten steel after the treatment were sampled and the number of inclusions was measured.

Table 1 below shows the results of calculating an inclusion removal rate and a standard deviation using the sampled molten steels, and the inclusion removal ratio was calculated by Formula 2 below.

$$\text{Formula 2: Inclusion removal ratio} = (\text{number of inclusions before molten steel treatment} - \text{number of inclusions after molten steel treatment}) / (\text{number of inclusions before molten steel treatment})$$

[Table 1]

| | Vibration amplitude | Inclusion removal ratio (average) | Standard deviation |
|---|---|---|---|
| Example | 0.10 | 28% | 0.14 |
| Comparative example 1 | 0.08 | 19% | 0.21 |
| Comparative example 2 | 0.12 | 2% | 0.22 |

Referring to Table 1 above, it may be found that the inclusion removal ratio is higher and the standard deviation is smaller in example, in which when the molten steel is slightly stirred, the amplitude of vibration occurring in the container is adjusted to the second target vibration range, and the naked melt surface is adjusted to be included in the naked melt area range, than in comparative examples 1 and 2. It is considered that this is because in example, during slight stirring, the container was adjusted so as to have the second target vibration range to ensure a stirring strength and inclusions are efficiently removed, and the oxidation of the molten steel was suppressed by reducing the area of the naked melt occurring during slight stirring, and thus, the inclusion removal ratio and the standard deviation were superior to comparative examples 1 and 2.

Conversely, in the case of comparative example 1, the amplitude of vibration occurring in the container during slight stirring did not reach the second target vibration range, so that the stirring strength could not be ensured, the inclusions in the molten steel was not properly removed, and thus, the inclusion removal ratio seemed to be lower than that in example.

In addition, in the case of comparative example 2, it is considered that the amplitude of vibration occurring in the container was higher than the second target vibration range and the stirring strength could be ensured, but due to this, slag on the top portion of the molten steel is mixed into the molten steel again, the molten steel was oxidized due to an increase in the naked melt area, and new inclusions were formed, and thus, the inclusion removal ratio and the standard deviation were seemed to be worst.

In addition, FIG. 5 illustrates cleanliness indexes of molten steel for which slight stirring was performed while the stirring strength and the naked melt area were adjusted using the present invention in a process of treating the actual molten steel, and of molten steel for which slight stirring was performed using a prior art without adjusting the stirring strength and the naked melt area. Here, the cleanliness index means the number of inclusions per unit area of molten steel, and it may mean that the smaller the numerical value, the greater the cleanliness. According to FIG. 5, it may be found that the cleanliness index is lower and the deviation is also smaller in the molten steel treated by the present invention than those in the molten steel treated using the prior art.

While the present invention has been described with reference to the accompanying drawings and preferred embodiments, the present invention is not limited thereto, but limited by claims below. Therefore, it will be readily understood by those skilled in the art that various modifications and changes can be made thereto without departing from the technical spirit of the claims below.

## INDUSTRIAL APPLICABILITY

A method for treating molten steel and an apparatus for the same according to an embodiment of the present invention may uniformize the components of molten steel, improve the removal efficiency of inclusions, and thus improve the quality and cleanliness of the molten steel.

## Claims

1. A method for treating molten steel, the method comprising:

   preparing molten steel in a container;
   supplying a stirring gas to the container to stir the molten steel;
   measuring a first vibration amplitude (Btl) occurring in the container; and
   determining a path for supplying the stirring gas according to the measured first vibration amplitude (Btl).

2. The method of claim 1, comprising:

   a main path configured to supply a predetermined amount of the stirring gas to the container; and
   a sub path configured to adjust an amount of the stirring gas and supply the adjusted amount of the stirring gas to the container, and
   the stirring of the molten steel comprises supplying a predetermined amount of the stirring gas using the main path.

3. The method of claim 2, wherein the determining of the path comprises determining supplying the stirring gas to the container using any one of the main path and the sub path according to the first vibration amplitude (Btl).

4. The method of claim 3, wherein the determining of the path comprises:

   comparing the first vibration strength with a predetermined first target vibration range (B01); and
   continuously supplying a predetermined amount of the stirring gas using the main path when the first vibration amplitude (Btl) is within the first target vibration range (B01).

5. The method of claim 3, wherein the determining of the path comprises:

comparing the first vibration strength with a predetermined first target vibration range (B01); and
blocking the main path, increasing a flowrate of the stirring gas, and supplying the stirring gas to the container through the sub path when the first vibration amplitude (Btl) is smaller than the first target vibration range (B01).

6. The method of claim 5, comprising:

re-measuring a vibration amplitude (Btln) occurring in the container after the increasing the flowrate of the stirring gas and supplying the stirring gas to the container through the sub path; and
comparing the re-measured vibration strength (Btln) and the first target vibration range (B01),
wherein re-measuring the first vibration amplitude (Btn1) so that the re-measured vibration amplitude (Btln) is within the first target vibration range (B01) and re-adjusting the flowrate of the stirring gas are repeatedly performed.

7. The method any one of claims 4 to 6, comprising adding a ferroalloy into the molten steel in order to adjust components of the molten steel when the path for supplying the stirring gas is determined.

8. The method of claim 7, comprising:

reducing a flowrate of the stirring gas supplied to the molten steel and slightly stirring the molten steel after the adding the ferroalloy;
adding a sub raw material to the molten steel;
measuring a second vibration amplitude (Bt2) occurring in the container;
comparing the second vibration amplitude (Bt2) and a predetermined second target vibration range (B02); and
determining whether to adjust the flowrate of the stirring gas according to a comparison result.

9. The method of claim 8, comprising determining that the flowrate of the stirring gas is not adjusted when the second vibration amplitude (Bt2) is within the second target vibration range (B02) and maintaining the flowrate of the stirring gas being supplied to the container.

10. The method of claim 8, comprising determining that the flowrate of the stirring gas is adjusted when the second vibration amplitude (Bt2) is out of the second target vibration range (B02), adjusting the flowrate of the stirring gas, and supplying the stirring gas to the container.

11. The method of claim 10, comprising:

re-measuring a second vibration amplitude (Bt2n) occurring in the container after the adjusting the flowrate of the stirring gas and supplying the stirring gas to the container; and
comparing the re-measured second vibration strength (Bt2n) and the second target vibration range (B02),
wherein re-measuring the second vibration amplitude (Btn2) so that the re-measured second vibration amplitude (Bt2n) is within the second target vibration range (B01) and re-adjusting the flowrate of the stirring gas are repeatedly performed.

12. The method of claim 8, further comprising:

calculating a naked melt area (At) formed in the slightly stirring the molten steel; and
determining whether to adjust the naked melt area according to the calculated naked melt area.

13. The method of claim 12, wherein the calculating of the naked melt area of the molten steel comprises:

measuring a temperature of a melt surface of the molten steel;
converting the measured temperature of the melt surface into image data representing a temperature distribution of the melt surface; and
calculating the naked melt area (at) of the molten steel from the image data.

14. The method of claim 13, wherein the determining of whether to adjust the naked melt area comprises determining that the naked melt area is not adjusted when the calculated naked melt area (At) is within a preset naked melt area range (A0), and slightly stirring the molten steel.

**15.** The method of claim 13, wherein the determining of whether to adjust the naked melt area comprises:

determining that the naked melt area is adjusted when the calculated naked melt area (At) is out of the preset naked melt area range (A0); and
further adding a sub raw material to the molten steel while slightly stirring the molten steel.

**16.** The method of claim 13, wherein the calculating of the naked melt area and the determining of whether to adjust the naked melt area are repeatedly performed while slightly stirring the molten steel.

**17.** An apparatus for treating molten steel, the apparatus comprising:

a gas supply part for supplying a stirring gas into a container containing molten steel;
a first measurement part for measuring a vibration occurring in the container; and
a control unit for controlling the gas supply part so that a path for supplying the stirring gas is determined using a result measured by the first measurement part.

**18.** The apparatus of claim 17, wherein the gas supply part comprises a plurality of paths configured to supply the stirring gas to the container,
wherein the plurality of paths comprises:

a main path configured to supply a predetermined amount of the stirring gas; and
a sub path configured to adjust the amount of the stirring gas and supply the stirring gas to the container.

**19.** The apparatus of claim 18, wherein the main path comprises:

a main pipe configured to connect a reservoir storing the stirring gas and the container; and
a flowrate controller provided to the main pipe and configured to perform adjustment so that a predetermined amount of the stirring gas is supplied to the container.

**20.** The apparatus of claim 19, wherein the sub path comprises:

a sub pipe configured to connect the reservoir and the container; and
a valve provided to the sub pipe so that an amount of the stirring gas supplied to the container is adjusted.

**21.** The apparatus of claim 20, comprising:

a second measuring part configured to measure a temperature of a melt surface of the molten steel; and
a raw material supply part configured to add a raw material to the molten steel.

**22.** The apparatus of claim 21, wherein the control unit comprises:

a storage unit configured to store pieces of information required during treating the molten steel;
an image processing unit configured to convert a measurement result from the second measurement part into image data;
a comparison unit configured to determine a subsequent treatment method using the measurement result measured by the first measurement part and the image data; and
a control unit configured to control operations of the gas supply part and the raw material supply part so that the molten steel is treated by the subsequent treatment method determined by the comparison unit.

**23.** The apparatus of claim 22, wherein the control unit controls operations of the flowrate controller and the valve so that the stirring gas is supplied to the container using the main pipe or the sub pipe.

**Fig.1**

200 : 210, 220, 222, 230, 232
300 : 300a, 300b

**Fig.2**

FIRST MEASUREMENT PART (MEASURE VIBRATION AMPLITUDE OF CONTAINER) 300

SECOND MEASUREMENT PART (MEASURE TEMPERATURE OF MELT SURFACE) 400

THIRD MEASUREMENT PART (MEASURE COMPONENTS AND TEMPERATURE OF MOLTEN STEEL) 700

CONTROL UNIT 600

STORAGE UNIT 610

IMAGE PROCESSING UNIT 620

COMPARISON UNIT 630

CONTROL UNIT 640

GAS SUPPLY PART 200

RAW MATERIAL SUPPLY PART 500

**Fig.3**

START

↓ S110

PREPARE MOLTEN STEEL

↓ S120

MEASURE COMPONENTS AND
TEMPERATURE OF MOLTEN STEEL

↓ S130

PREPARE FERROALLOY AND
SUB RAW MATERIAL

↓ S140

SUPPLY STIRRING GAS THROUGH
MAIN PIPE

↓ S150

MEASURE FIRST VIBRATION
AMPLITUDE (Bt1) OCCURING
IN CONTAINER

↓

S170

SUPPLY STIRRING GAS
THROUGH SUB PIPE
(BLOCK MAIN PIPE) =>
INCREASE FLOWRATE
OF STIRRING GAS

Bt1<B01 ←

S160

COMPARE
MEASURED FIRST
VIBRATON AMPLITUDE (Bt1)
AND FIRST TARGET
VIBRATION AMPLITUDE
(B01)

→ Bt1>B01

S172

REDUCE
FLOWRATE
OF STIRRING
GAS

↓ Bt1=B01

S180

SUPPLY STIRRING GAS
THROUGH MAIN PIPE

↓ S190

STRONG
STIRRING

ADD FERROALOY

↓

A

Fig.4

```
                                    ( A )
                                      │
──────────────────────────────────────────────────────────────
          │                           │                     S210
      SLIGHT            ┌──────────────────────────────┐
      STIRRING          │ REDUCE FLOWRATE OF STIRRING GAS │
                        └──────────────────────────────┘
                                      │                     S220
                        ┌──────────────────────────────┐
                        │      ADD SUB RAW MATERIAL      │
                        └──────────────────────────────┘
                                      │                     S230
                        ┌──────────────────────────────┐
                        │    MEASURE SECOND VIBRATION    │
          ┌─────────────│         AMPLITUDE (Bt2)        │─────────────┐
          │             │      OCCURING IN CONTAINER     │             │
          │             └──────────────────────────────┘             │
     S242 │                           │                     S240   S244 │
┌──────────────┐              ╱────────────────╲           ┌──────────────┐
│   INCREASE   │  Bt2<B02    ╱      COMPARE       ╲  Bt2>B02 │   REDUCE     │
│  FLOWRATE OF │◄────────────   MEASURED SECOND    ─────────►│ FLOWRATE OF  │
│ STIRRING GAS │             ╲ VIBRATION AMPLITUDE (Bt2) WITH╱          │ STIRRING GAS │
└──────────────┘              ╲ SECOND TARGET VIBRATION ╱    └──────────────┘
                               ╲   RANGE (B02)    ╱
                                ╲────────────────╱
                                      │ Bt2=B02              S250
                        ┌──────────────────────────────┐
          ┌─────────────│  MEASURE TEMPERATURE OF MELF SURFACE │
          │             └──────────────────────────────┘
          │                           │                     S260
          │             ┌──────────────────────────────┐
          │             │    CALCULATE NAKED MELT AREA   │
          │             └──────────────────────────────┘
     S272 │                           │                     S270
┌──────────────┐  NOT WITHIN ╱────────────────╲
│   FURTHER    │  (At>A0)   ╱   IS MESURED      ╲
│ ADD SUB RAW  │◄───────────  NAKED MELT AREA WITHIN ──────────┐
│   MATERIAL   │            ╲  SET NAKED NELT AREA ╱            │
└──────────────┘             ╲   RANGE (A0)?    ╱              │
                              ╲────────────────╱               │
                          WITHIN │                             │
                          (At≦A0) │      S280                   │
                              ╱────────────────╲   NO          │
                             ╱ IS SET TIME REACHED? ╲───────────┘
                              ╲────────────────╱
                                      │ YES                 S290
                        ┌──────────────────────────────┐
                        │    STOP SUPPLYING STIRRING GAS │
                        └──────────────────────────────┘
                                      │
                                    ( END )
```

**Fig.5**

## INTERNATIONAL SEARCH REPORT

| International application No. |
|---|
| **PCT/KR2018/016100** |

### A. CLASSIFICATION OF SUBJECT MATTER

*C21C 7/072(2006.01)i, B22D 1/00(2006.01)i*

According to International Patent Classification (IPC) or to both national classification and IPC

### B. FIELDS SEARCHED

Minimum documentation searched (classification system followed by classification symbols)
C21C 7/072; B22D 2/00; B22D 41/58; C21C 5/34; C21C 7/00; B22D 1/00

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: molten steel treatment, cleanliness, ladle, agitation, gas, vibration, component adjustment

### C. DOCUMENTS CONSIDERED TO BE RELEVANT

| Category* | Citation of document, with indication, where appropriate, of the relevant passages | Relevant to claim No. |
|---|---|---|
| X | KR 10-2012-0028729 A (DONGBU STEEL CO., LTD.) 23 March 2012 | 1,17 |
| | See paragraphs [0020]-[0038], [0058]-[0063], claims 1, 5 and figures 1, 4. | |
| A | | 2-16,18-23 |
| A | KR 10-2007-0038090 A (ARCELORMITTAL FRANCE) 09 April 2007 | 1-23 |
| | See paragraphs [0024]-[0026], claims 1, 6 and figure 1. | |
| A | KR 10-2009-0062188 A (POSCO) 17 June 2009 | 1-23 |
| | See paragraphs [0022]-[0024] and figure 2. | |
| A | KR 10-0554144 B1 (POSCO) 20 February 2006 | 1-23 |
| | See paragraphs [0053]-[0088] and claim 1. | |
| A | KR 10-2002-0032710 A (POSCO) 04 May 2002 | 1-23 |
| | See claims 1, 4. | |

| ☐ Further documents are listed in the continuation of Box C. | ☒ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 APRIL 2019 (24.04.2019) | **25 APRIL 2019 (25.04.2019)** |

| Name and mailing address of the ISA/KR | Authorized officer |
|---|---|
| Korean Intellectual Property Office<br>Government Complex Daejeon Building 4, 189, Cheongsa-ro, Seo-gu,<br>Daejeon, 35208, Republic of Korea | |
| Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2018/016100**

| Patent document cited in search report | Publication date | Patent family member | Publication date |
|---|---|---|---|
| KR 10-2012-0028729 A | 23/03/2012 | KR 10-1201660 B1 | 14/11/2012 |
| KR 10-2007-0038090 A | 09/04/2007 | BR PI0512853 A | 08/04/2008 |
| | | BR PI0512853 A8 | 27/02/2018 |
| | | CA 2568845 A1 | 09/02/2006 |
| | | CA 2568845 C | 29/03/2011 |
| | | CN 104073601 A | 01/10/2014 |
| | | CN 1977056 A | 06/06/2007 |
| | | EP 1799869 A2 | 27/06/2007 |
| | | EP 1799869 B1 | 04/06/2014 |
| | | FR 2872518 A1 | 06/01/2006 |
| | | FR 2872518 B1 | 27/07/2007 |
| | | JP 2008-504133 A | 14/02/2008 |
| | | JP 4727663 B2 | 20/07/2011 |
| | | KR 10-1141995 B1 | 24/05/2012 |
| | | MX 2007000148 A | 07/03/2007 |
| | | RU 2007104042 A | 10/08/2008 |
| | | RU 2378389 C2 | 10/01/2010 |
| | | US 2008-0047396 A1 | 28/02/2008 |
| | | US 2009-0145572 A1 | 11/06/2009 |
| | | US 7780906 B2 | 24/08/2010 |
| | | US 7942950 B2 | 17/05/2011 |
| | | WO 2006-013239 A2 | 09/02/2006 |
| | | WO 2006-013239 A3 | 04/05/2006 |
| KR 10-2009-0062188 A | 17/06/2009 | None | |
| KR 10-0554144 B1 | 20/02/2006 | KR 10-2003-0052727 A | 27/06/2003 |
| KR 10-2002-0032710 A | 04/05/2002 | KR 10-0488757 B1 | 11/05/2005 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20020032710 A
- KR 0696853 B